# EUROPÄISCHE PATENTSCHRIFT

(11) **EP 1 413 692 B1**
(45) Veröffentlichungstag und Bekanntmachung des Hinweises auf die Patenterteilung: **02.12.2009**
(21) Anmeldenummer: 03024197.0
(22) Anmeldetag: 21.10.2003
(51) Int. Cl.: E04B 9/16

(54) **Kreuzverbinder**
Cross-connector
Liaison croisée

(30) Priorität: 24.10.2002 DE 10249783
(43) Veröffentlichungstag der Anmeldung: 28.04.2004
(73) Patentinhaber: Richter-System GmbH & Co. KG, 64347 Griesheim (DE)
(72) Erfinder: Knauf, Alfons Jean, 64347 Griesheim (DE)
(74) Vertreter: Katscher Habermann Patentanwälte

(56) Entgegenhaltungen:
- DE-A- 19 753 711
- DE-U- 29 612 593
- DE-U- 29 822 806
- DE-U- 29 910 957

## Beschreibung

Die Erfindung betrifft einen Kreuzverbinder für zwei aufeinander liegende, sich rechtwinklig kreuzende U- und/oder C-Profilschienen, wobei der Kreuzverbinder aus Stahlblech eine oben liegende Stegplatte aufweist, von der zwei Verbinderschenkel rechtwinklig nach unten abgewinkelt sind und seitliche Hakenvorsprünge aufweisen, die in die untere Profilschiene einhakbar sind, und wobei aus der Stegplatte mindestens zwei Federzungen ausgestanzt sind.

Derartige Kreuzverbinder dienen dazu, sich rechtwinklig kreuzende Profilschienen zu verbinden, die beispielsweise Tragschienen für abgehängte Unterdecken bilden. Ein bekannter Kreuzverbinder der eingangs genannten Gattung (DE 43 35 000 C2) ist dazu bestimmt, zwei C-Deckenprofile (sog. CD-Profile nach DIN 18 182) miteinander zu verbinden. Hierbei weist auch die jeweils oben liegende Profilschiene ebenso wie die untere Profilschiene einen nach innen gerichteten Profilrand auf. Wenn die obere Profilschiene wie üblich so angeordnet ist, dass sie nach oben offen ist, bilden deren nach innen vorspringende Profilränder eine ausreichende Auflagefläche für die beiden Federzungen, die aus der Stegplatte des Kreuzverbinders ausgestanzt sind. Die beiden Federzungen sind über Biegekanten, die sich parallel zu den Verbinderschenkeln erstrecken, mit der Stegplatte des Kreuzverbinders verbunden und erstrecken sich schräg nach unten zu dem jeweils zugeordneten Verbinderschenkel hin.

Wenn als jeweils obere Profilschiene jedoch ein U-Aussteifungsprofil (UA-Profil gemäß DIN 18 182) verwendet wird, das keine nach innen gerichtete Profilränder aufweist, so ist eine sichere Auflage der Federzungen nicht sichergestellt. Insbesondere besteht die Gefahr, dass die Federzungen bei der Montage so verformt werden, dass die Federzungen von den freien Kanten des U-Aussteifungsprofils abrutschen, so dass ihre Funktion verloren geht.

Aufgabe der Erfindung ist es daher, einen Kreuzverbinder der eingangs genannten Gattung so auszubilden, dass auch bei der Verwendung von Profilschienen, die nur zwei schmale, oben liegende Profilkanten aufweisen, insbesondere U-Aussteifungsprofilen, eine sichere Auflage der Federzungen des Kreuzverbinders gewährleistet ist.

Diese Aufgabe wird erfindungsgemäß dadurch gelöst, dass jede Federzunge jeweils an einer rechtwinklig zu den benachbarten Verbinderschenkeln verlaufenden Biegekante mit der Stegplatte verbunden ist und seitlich über die Ebene des Verbinderschenkels hinausragt.

Der Auflagerand, mit dem jede Federzunge auf die darunter liegende Profilschiene drückt, erstreckt sich somit quer zu dieser Profilschiene und quer zu den Verbinderschenkeln, wobei dieser durch die freie Kante der Federzunge gebildete Auflagerand sich seitlich über die Ebene des benachbarten Verbinderschenkels hinaus erstreckt. Damit ist sichergestellt, dass die Federzunge unter allen auch währende der Montage auftretenden Bedingungen sicher auf die Profilschiene drückt. Dies gilt insbesondere auch, wenn es sich dabei um ein U-Aussteifungsprofil (UA-Profil nach DIN 18 182) oder ein ähnliches Profil handelt, dessen beide ohne vorspringende Profilränder ausgeführten Profilflansche sich nach oben erstrecken. Auch bei einer Anordnung der oberen Profilschiene mit oben liegendem Profilsteg und auch bei der Verwendung von anderen Profilschienen, beispielsweise C-Deckenprofilen (CD-Profil nach DIN 18 182) ist unter allen auftretenden Bedingungen eine sichere Auflage der Federzungen an der Profilschiene gewährleistet.

Vorzugsweise ist jede Federzunge aus einer Öffnung ausgestanzt, die sich aus der Stegplatte bis in den angrenzenden Verbinderschenkel erstreckt. Der sich in den Verbinderschenkel erstreckende Abschnitt der ausgestanzten Öffnung liefert einerseits das Material für die seitliche Verlängerung der Federzunge; andererseits wird durch diese von oben in den Verbinderschenkel hinein verlaufende Öffnung ausreichender Platz für die schräg nach unten verlaufende Federzunge geschaffen.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist.

### Es zeigt:

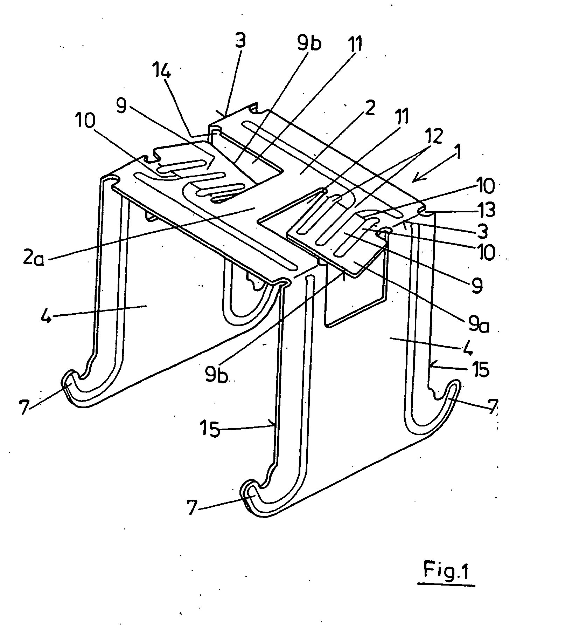

Fig. 1 in räumlicher Darstellungsweise einen Kreuzverbinder,
Fig. 2 in räumlicher Darstellungsweise die Abschnitte zweier Profilschienen, die durch einen Kreuzverbinder gemäß Fig. 1 miteinander verbunden sind, wobei die obere UA-Profilschiene nach oben geöffnet ist, und
Fig. 3 ebenfalls in räumlicher Darstellungsweise eine Verbindung ähnlich der Fig. 2, wobei jedoch die obere UA-Profilschiene nach unten geöffnet ist.

Der in der Zeichnung dargestellte Kreuzverbinder 1 besteht aus Stahlblech. Er weist eine im üblichen Einsatzfall oben liegende Stegplatte 2 auf, deren entgegengesetzte Ränder jeweils eine Biegekante 3 bilden, an der jeweils ein Verbinderschenkel 4 rechtwinklig nach unten abgekantet ist.

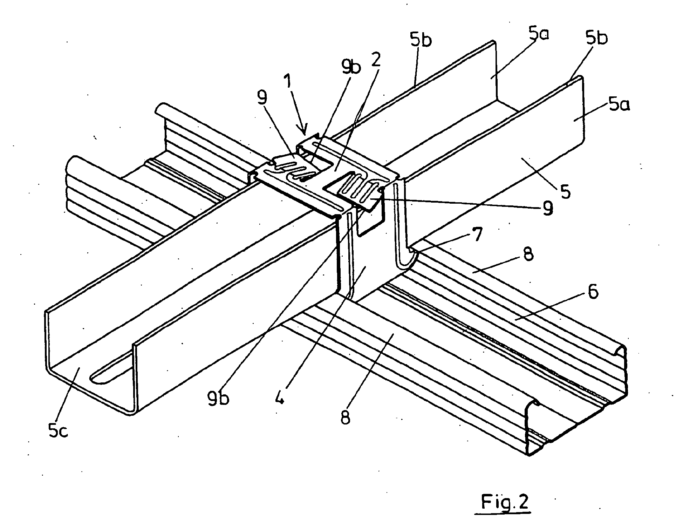

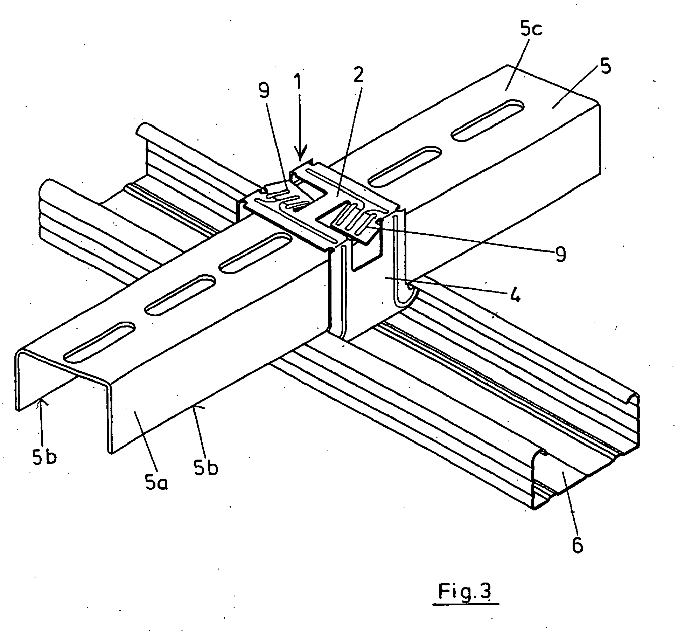

Der Kreuzverbinder 1 dient zur Verbindung von zwei aufeinander liegenden, im wesentlichen U-förmigen Profilschienen 5 und 6, wie in den Fig. 2 und 3 dargestellt ist. Diese Profilschienen 5 und 6 bilden beispielsweise einen Teil einer abgehängten Unterdecke. Hierbei liegt die Stegplatte 2 an der Oberseite der jeweils oberen Profilschiene 5 an, während seitliche Hakenvorsprünge 7 der Verbinderschenkel 4 in die jeweils untere Profilschiene 6 eingehakt sind. Diese untere Profilschiene 6 ist als CD-Profilschiene ausgeführt und weist gegeneinander vorspringende Profilränder 8 auf, unter die die seitlichen Hakenvorsprünge 7 greifen, wie in den Fig. 2 und 3 dargestellt ist.

Aus der Stegplatte 2 des Kreuzverbinders 1 sind zwei Federzungen 9 ausgestanzt und jeweils an einer Biegekante 10 leicht nach unten abgewinkelt.

Die beiden Biegekanten 10 erstrecken sich rechtwinklig zu dem jeweils benachbarten Verbinderschenkel 4. Jede Federzunge 9 ist aus einer Öffnung 11 ausgestanzt, die sich aus der Stegplatte 2 bis in den jeweils angrenzenden Verbinderschenkel erstreckt. Jede Federzunge 9 ragt seitlich über die Ebene des Verbinderschenkels 4 hinaus.

Der sich über die Ebene des Verbinderschenkels 4 erstreckende Abschnitt 9a jeder Federzunge 9 beträgt etwa 10% - 25% der Breite der gesamten Federzunge 9.

Die beiden Öffnungen 11, aus denen die Federzungen 9 ausgestanzt sind, fluchten beim dargestellten Ausführungsbeispiel miteinander. Zwischen ihnen verbleibt ein Blechsteg 2a der Stegplatte 2.

Die beiden Biegekanten 10, an denen die Federzungen 9 abgewinkelt sind, sind symmetrisch zueinander gegenüber der Mitte der Stegplatte 2 versetzt, so dass auch die Federzungen 9 symmetrisch zueinander angeordnet sind. Dadurch sind auch die von den Federzungen 9 auf den Kreuzverbinder 1 rückwirkenden Federkräfte symmetrisch.

Aus der Stegplatte 2 erstrecken sich mindestens eine, beim dargestellten Ausführungsbeispiel mehrere parallele Verstärkungssicken 12, vorzugsweise rechtwinklig zur Biegekante 10 und über diese hinaus in die jeweilige Federzunge 9. Dadurch wird auch bei Verwendung von verhältnismäßig dünnem Blech eine ausreichend hohe Federkraft der Federzungen 9 erreicht.

Wie in den Fig. 2 und 3 gezeigt, ist die jeweils obere Profilschiene 5 ein UA-Profil, dessen beide Profilflansche jeweils eine glatte, gerade Profilkante 5b aufweisen. Wenn diese obere Profilschiene 5 - wie in Fig. 2 gezeigt - so angeordnet ist, dass sie nach oben offen ist, dann drücken die Endkanten 9b der Federzungen 9 auf die Profilkanten 5b. Die Endkanten 9b erstrecken sich hierbei quer zu den Profilkanten 5b und verlaufen somit senkrecht zu den Verbinderschenkeln 4. Auch bei Verformungen oder Maßabweichungen der oberen Profilschiene 5 ist eine sichere Auflage der Federzungen 9 auf der Profilschiene 5 gewährleistet.

Fig. 3 zeigt, dass die obere Profilschiene 5 auch in umgekehrter Stellung, nämlich nach unten geöffnet, angeordnet werden kann. Die beiden Federzungen 9 drücken hierbei auf die Ränder des Profilstegs 5c der Profilschiene 5.

Um das Abkanten der Verbinderschenkel 4 von der Stegplatte 2 zu erleichtern, ist vorgesehen, dass sich an der den Verbinderschenkel 4 mit der Stegplatte 2 verbindenden Biegekante 3 seitliche Kerben 13 bzw. 14 von den Außenrändern 15 des Kreuzverbinders 1 und/oder der Öffnung 11 vorspringen, aus der die Federzunge 9 ausgestanzt ist.

## Patentansprüche

1. Kreuzverbinder (1) für zwei aufeinander liegende, sich rechtwinklig kreuzende U- und/oder C-Profilschienen (5, 6), wobei der Kreuzverbinder (1) aus Stahlblech eine oben liegende Stegplatte (2) aufweist, von der zwei Verbinderschenkel (4) rechtwinklig nach unten abgewinkelt sind und seitliche Hakenvorsprünge (7) aufweisen, die in die untere Profilschiene (6) einhakbar sind, und wobei aus der Stegplatte (2) mindestens zwei Federzungen (9) ausgestanzt sind, **dadurch gekennzeichnet, dass** jede Federzunge (9) jeweils an einer rechtwinklig zu dem benachbarten Verbinderschenkel (4) verlaufenden Biegekante (10) mit der Stegplatte (2) verbunden ist und seitlich über die Ebene des Verbinderschenkels (4) hinausragt.

2. Kreuzverbinder nach Anspruch 1, **dadurch gekennzeichnet, dass** die Federzunge (9) aus einer Öffnung (11) ausgestanzt ist, die sich aus der Stegplatte (2) bis in den angrenzenden Verbinderschenkel (4) erstreckt.

3. Kreuzverbinder nach Anspruch 2, **dadurch gekennzeichnet, dass** die beiden Öffnungen (11) aus denen die Federzungen (9) ausgestanzt sind, miteinander fluchten und zwischen ihnen ein Blechsteg (2a) verbleibt.

4. Kreuzverbinder nach Anspruch 1, **dadurch gekennzeichnet, dass** sich mindestens eine Verstärkungssicke (12) aus der Stegplatte (2) über die Biegekante (10) bis in die Federzunge (9) erstreckt.

5. Kreuzverbinder nach Anspruch 4, **dadurch gekennzeichnet, dass** die Verstärkungssicke (12) rechtwinklig zur Biegekante (10) verläuft.

6. Kreuzverbinder nach Anspruch 4, **dadurch gekennzeichnet, dass** sich mehrere parallele Verstärkungssicken (12) aus der Stegplatte (2) über die Biegekante (10) in die Federzunge (9) erstrecken.

7. Kreuzverbinder nach Anspruch 1, **dadurch gekennzeichnet, dass** der sich über die Ebene des Verbinderschenkels (4) erstreckende Abschnitt (9a) der Federzunge (9) etwa 10% - 25% der Breite der Federzunge (9) beträgt.

8. Kreuzverbinder nach Anspruch 1, **dadurch gekennzeichnet, dass** sich an der den Verbinderschenkel (4) mit der Stegplatte (2) verbindenden Biegekante (3) seitliche Kerben (13 bzw. 14) von den Außenrändern (15) des Kreuzverbinders (1) und/oder der Öffnung (11) vorspringen, aus der die Federzunge (9) ausgestanzt ist.

## Claims

1. Cross-connector (1) for two U- and/or C-profile rails (5, 6) which are situated one on top of the other and intersect one another at a right angle, wherein the cross-connector (1) made of steel sheet has an upper web plate (2) from which two connector legs (4) are angled downwardly at a right angle and have lateral hook projections (7) which can be hooked into the lower profile rail (6), and wherein at least two spring tongues (9) are stamped out of the web plate (2), **characterized in that** each spring tongue (9) is respectively connected to the web plate (2) at a bending edge (10) extending at a right angle to the adjacent connector leg (4) and projects laterally beyond the plane of the connector leg (4).

2. Cross-connector according to Claim 1, **characterized in that** the spring tongue (9) is stamped out of an opening (11) which extends from the web plate (2) into the adjoining connector leg (4).

3. Cross-connector according to Claim 2, **characterized in that** the two openings (11) out of which are stamped the spring tongues (9) are aligned with one another and a sheet metal web (2a) remains between them.

4. Cross-connector according to Claim 1, **characterized in that** at least one reinforcing bead (12) extends from the web plate (2) over the bending edge (10) into the spring tongue (9).

5. Cross-connector according to Claim 4, **characterized in that** the reinforcing bead (12) extends at a right angle to the bending edge (10).

6. Cross-connector according to Claim 4, **characterized in that** a plurality of parallel reinforcing beads (12) extend from the web plate (2) over the bending edge (10) into the spring tongue (9).

7. Cross-connector according to Claim 1, **characterized in that** the portion (9a) of the spring tongue (9) that extends beyond the plane of the connector leg (4) amounts to approximately 10%-25% of the width of the spring tongue (9).

8. Cross-connector according to Claim 1, **characterized in that,** at the bending edge (3) connecting the connector leg (4) to the web plate (2), lateral notches (13 and 14) project from the outer edges (15) of the cross-connector (1) and/or from the opening (11) out of which the spring tongue (9) is stamped.

## Revendications

1. Connecteur croisé (1) pour deux rails profilés en U et/ou en C (5, 6) se croisant à angle droit et disposé l'un au-dessus de l'autre, le connecteur croisé (1) en tôle d'acier présentant une plaque à nervures (2) disposée en haut, de laquelle deux branches de connecteur (4) sont coudées à angle droit vers le bas et présentent des saillies latérales en crochet (7) qui peuvent être accrochées dans le rail profilé inférieur (6), et au moins deux langues à ressort (9) étant estampées dans la plaque à nervures (2), **caractérisé en ce que** chaque langue à ressort (9) est à chaque fois connectée à la plaque à nervures (2) au niveau d'une arête flexible (10) s'étendant à angle droit par rapport à la branche de connecteur adjacente (4), et fait saillie latéralement au-delà du plan de la branche de connecteur (4).

2. Connecteur croisé selon la revendication 1, **caractérisé en ce que** la langue à ressort (9) est estampée hors d'une ouverture (11) qui s'étend depuis la plaque à nervures (2) jusque dans la branche de connecteur adjacente (4).

3. Connecteur croisé selon la revendication 2, **caractérisé en ce que** les deux ouvertures (11) hors desquelles les langues à ressort (9) sont estampées sont en affleurement l'une avec l'autre et présentent une nervure de tôle (2a) subsistant entre elles.

4. Connecteur croisé selon la revendication 1, **caractérisé en ce qu'**au moins une moulure de renforcement (12) s'étend hors de la plaque à nervures (2) par-dessus l'arête flexible (10) jusque dans la langue à ressort (9).

5. Connecteur croisé selon la revendication 4, **caractérisé en ce que** la moulure de renforcement (12) s'étend à angle droit par rapport à l'arête flexible (10).

6. Connecteur croisé selon la revendication 4, **caractérisé en ce que** plusieurs moulures de renforcement parallèles (12) s'étendent hors de la plaque à nervures (2) par-dessus l'arête flexible (10) dans la langue à ressort (9).

7. Connecteur croisé selon la revendication 1, **caractérisé en ce que** la portion (9a) de la langue à ressort (9) s'étendant sur le plan de la branche de connecteur (4) constitue approximativement 10% à 25% de la largeur de la langue à ressort (9).

8. Connecteur croisé selon la revendication 1, **caractérisé en ce que** des encoches latérales (13, respectivement 14) au niveau de l'arête flexible (3) reliant la branche de connecteur (4) à la plaque à nervures (2) font saillie depuis les bords extérieurs (15) du connecteur croisé (1) et/ou de l'ouverture (11), hors de laquelle la langue à ressort (9) est estampée.
